# EUROPEAN PATENT SPECIFICATION

(11) **EP 1 322 147 B1**
(45) Date of publication and mention of the grant of the patent: **03.08.2005**
(21) Application number: 01960825.6
(22) Date of filing: 31.08.2001
(51) Int. Cl.: A01F 15/07, A01F 25/14

(54) **METHOD AND APPARATUS FOR WRAPPING A PIECE WITH PLASTIC**
VERFAHREN UND VORRICHTUNG ZUM EINWICKELN EINES TEILS MIT KUNSTSTOFF
PROCEDE D'EMBALLAGE D'ARTICLES AVEC UNE MATIERE PLASTIQUE ET APPAREIL A CET EFFET

(30) Priority: 04.09.2000 FI 20001935
(43) Date of publication of application: 02.07.2003
(73) Proprietor: Wrapmatic OY, 44280 Sumiainen (FI)
(72) Inventor: KORHONEN, Onni, FIN-00760 Helsinki (FI)
(74) Representative: Salomäki, Juha Kari Ensio
(86) International application number: PCT/FI2001/000755
(87) International publication number: WO 2002/019796

(56) References cited:
- WO-A1-94/01997
- WO-A1-99/22583
- GB-A- 2 269 795
- SE-C2- 511 175
- US-A- 5 660 023

## Description

The present invention relates to a procedure as defined in the preamble of claim 1 and to an apparatus as defined in the preamble of claim 5 for wrapping an object, such as a straw fodder bale, with plastic.

In prior art, e.g. an apparatus for wrapping a fodder bale is known which is provided with wheels and designed to be hitched to a tractor or baling press and which has picking means for picking up a bale from the ground, a wrapping table for rotating the bale, a wrapping arm revolving about the bale and provided with a plastic roll or a special wrapping frame rotating in a vertical plane especially for so-called square bales, and a plastic holder and a plastic cutter. Large, cornered rectangular bales have been found to be advantageous e.g. in that their angular shape allows them to be packed in a small space for transport and storage. However, they involve the drawback that, because of their elongated and cornered shape, rectangular bales cannot be wrapped in plastic in a profitable and efficient manner and without wasting plastic; instead, large and expensive machines have been needed which weigh a lot on the field but whose wrapping performance does not satisfy the efficiency demands placed on a continuous working high-capacity baler. Therefore, rectangular bales have been wrapped e.g. by using wrapping equipment modified from wrapping machines designed for wrapping round bales with plastic. This has led to a poor and inefficient wrapping result. In addition, the amount of plastic needed in relation to the amount of fodder stored has been greater than in the case of round bales. Besides, separate equipment for loading and handling the bales has been needed.

The object of the present invention is to eliminate the above-mentioned drawbacks and to achieve a reliable and easy-to-use method and a corresponding apparatus for wrapping objects of different shapes and especially cornered rectangular bales with plastic. The method of the invention is characterized by what is presented in the characterization part of claim 1, and the apparatus of the invention is characterized by what is presented in the characterization part of claim 5. Other embodiments of the invention are characterized by what is presented in the other claims.

The solution of the invention provides the advantage that the same wrapping apparatus can be for effectively wrapping both round bales and cornered rectangular bales or other packages of about the same size and shape, consisting of one or more parts. As this wrapping system produces a good wrapping result, a very good fodder quality is achieved with a minimum level of plastic consumption. An additional advantage is that, in addition to the wrapping, further handling of the bale, such as stockpiling, can be performed by the same apparatus. A bale on the field can be gripped e.g. by its ends and lifted onto the apparatus to a desired height. Correspondingly, after the wrapping, the bales can be piled in stacks of as many as three tiers. A further advantage is the light weight of the apparatus, which means that using the apparatus on a field will not create any problems regarding the ground surface. An additional advantage is a simple construction and economical price of the apparatus, so the apparatus is well applicable for use by contractors as well as farms. One of the factors contributing to the economical and light construction is a guide ring along which rolls of plastic film circulate about the bale while the bale can also be rotated about itself if necessary during the wrapping operation.

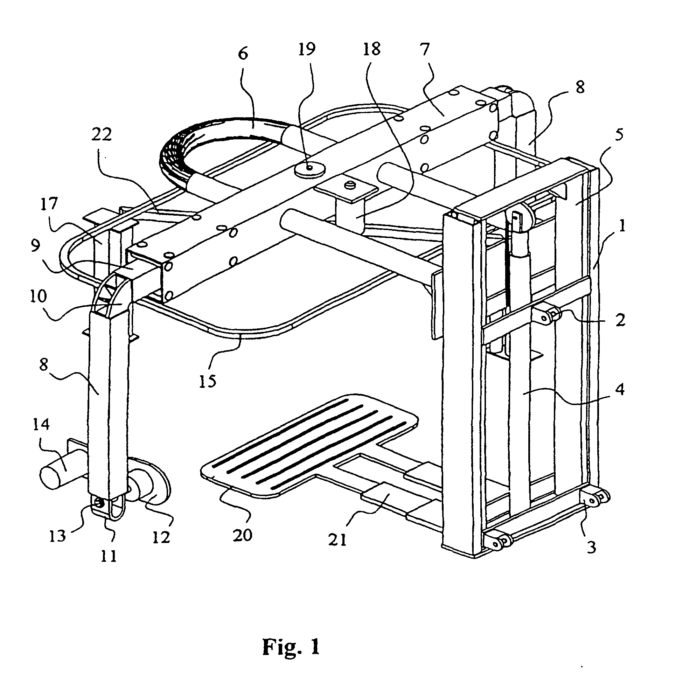

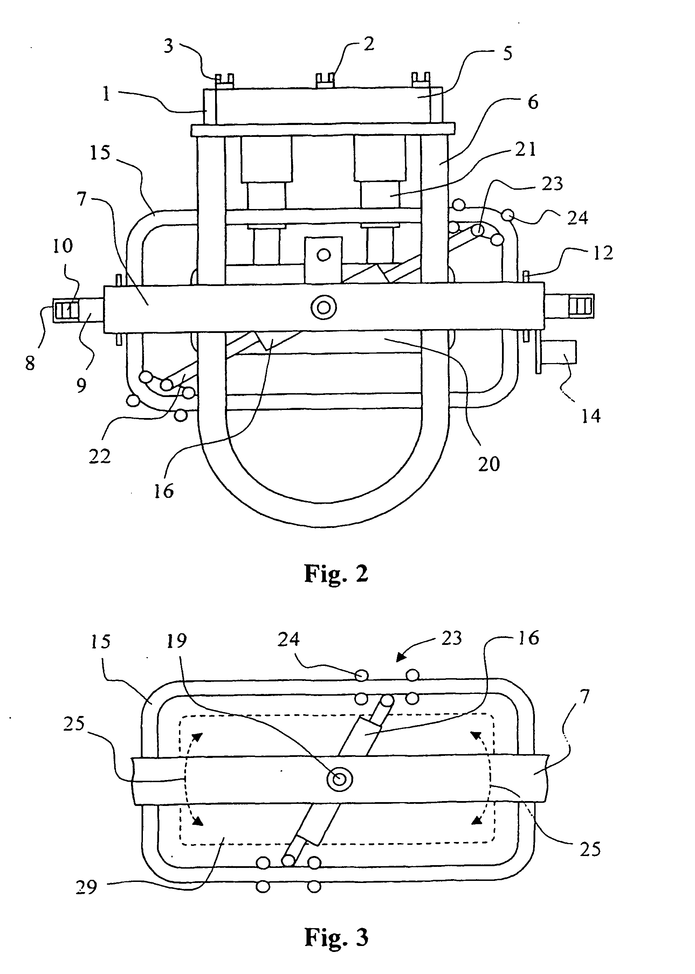

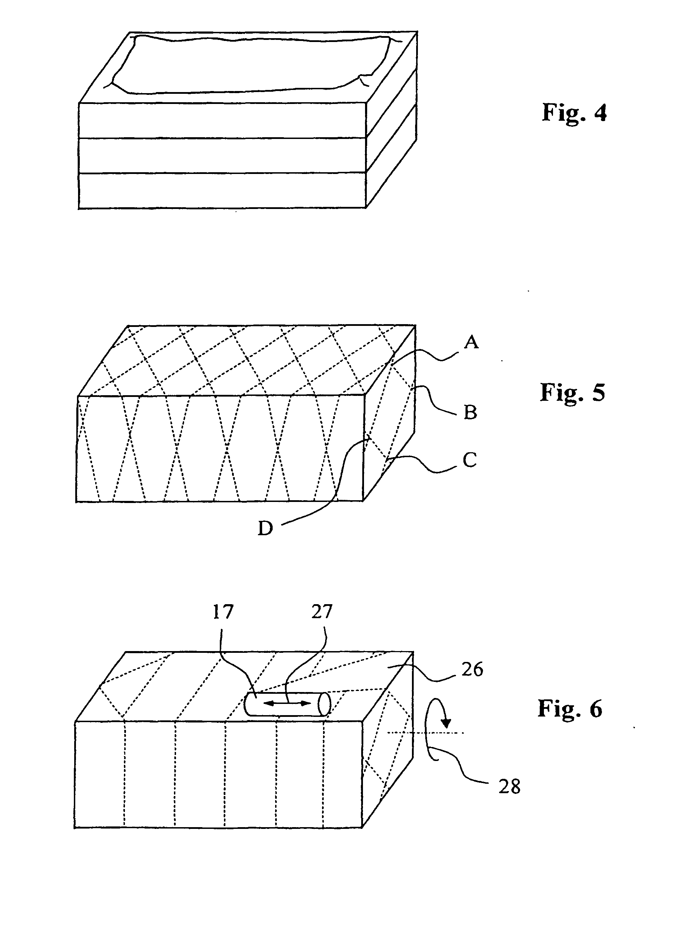

In the following, the invention will be described in detail by the aid of an example with reference to the attached drawings, wherein
- Fig.: 1 presents the wrapping apparatus in an oblique rear view,
- Fig.: 2 presents the same wrapping apparatus in top view,
- Fig.: 3 presents a part of the same wrapping apparatus in a simplified top view, and
- Fig. 4-6: present an oblique top view of a bale at different stages of a wrapping operation and wrapped in different ways.

First, the apparatus of the invention will be described, making it easier to understand the method. The apparatus is operated e.g. by a tractor, to whose front or rear part the wrapping apparatus of the invention, hereinafter designated as apparatus, is hitched. The apparatus comprises a frame part 1, which is provided with mounting brackets 2 and 3 for hitch-up to a tractor. In addition, the frame part is provided with a hydraulic cylinder 4 used as a power unit, which is normally mounted in a substantially upright position. Mounted in the frame part is an supporting frame 5 which is movable relative to the frame part, sliding in a substantially vertical plane along guide tracks provided in the frame part and being driven by the hydraulic cylinder 4. Connected to the supporting frame 5 is a top support bracket 6 which extends from the supporting frame in a direction directly away from the tractor or equivalent driving machine and moves vertically together with the supporting frame 5. Attached to the top support bracket 6 is a top beam 7 mounted in a position substantially transverse to the top support bracket and having an axial length nearly equal to the width of the apparatus. The top beam is hollow at least in its end portions and gripper arms are mounted in the top beam so that an upper arm 9 of the gripper arms is partly inside the hollow end of the top beam. In addition to the upper arm 9, the gripper arm comprises an upright arm 8 and a joint section 10 connecting the upper arm and the upright arm, the joint section being itself supported by the upper arm 9 and in turn supporting the upright arm 8. The upright arm 8 is movable relative to the upper arm in a plane passing substantially via the longitudinal center axis of the top beam, said plane being substantially vertical when the apparatus is in a normal operating position. The horizontal distance between the lower ends of the two upright arms 8 can be varied to receive the bale into the apparatus and to press it between the lower ends. In addition, the horizontal distance between the upright arms can be adjusted by sliding the upper arms 9 inside the ends of the top beam 7 either inward or outward. This makes it possible to take bales of different sizes into the apparatus. The adjustment can be made either manually or via software control using separate actuators.

The lower end of the each upright arm 8 is provided with a press plate 12 mounted in a position projecting from the upright arm toward the other corresponding press plate. Thus, the press plate surfaces pressed against the bale are facing toward each other. At least one of the press plates is provided with a rotating mechanism 14 which, e.g. via a chain transmission, rotates the press plate about its horizontal axis 13 when necessary. The other press plate may be without a rotation mechanism, but it is also provided with a horizontal axis 13 about which it can rotate. The gripper arm comprises an extension placed below the upright arm 8 and forming a leg 11 which can be lowered to the ground when necessary to support the apparatus and to adjust gripping height of the press plates.

Attached below the top beam 7 is a guide ring 15 having a rectangular shape as seen from above, with rounded corners. In side view, the guide ring is in a substantially horizontal plane when the machine is in the normal operating position. The guide ring functions as a guide track for a wrapping device comprised in the apparatus, which is hinged on the top beam 7 via a substantially vertical hinge 19. The wrapping device comprises a frame box 16, two horizontal arms 22, a roller guide 23 at the outer end of the each horizontal arm, said roller guide comprising guide rollers 24 and a plastic roll 17 moving together with each roller guide, each plastic roll being provided with a separate drive means.

The frame box 16 is pivotally mounted on the top beam 7 and rotated about the hinge 19 axis by a drive mechanism 18 attached to the top beam 7. The frame box rotates in a substantially horizontal plane when the apparatus is in the normal operating position. The horizontal arms 22 at each end of the frame box are fitted inside the frame box so that, depending on the rotational position of the frame box, the horizontal arms either retract into the frame box or project further out of the frame box. The inward-outward movement of the horizontal arms is controlled by the roller guides 23, said movement depending on the current position of roller guides. The roller guide is pivotally connected to the outer end of the horizontal arm. Each roller guide comprises four guide rollers 24, two of which run along the outer edge of the guide ring 15 while the other two run along the inner edge of the guide ring. The guide ring has a circular cross-section and the guide rollers have a half-round concave rolling surface of suitable dimensions to keep the guide rollers well on the guide ring so that they roll along the ring.

The outer ends of the horizontal arms also comprise a mounting for plastic rolls 17 in connection with the roller guides, the bale being wrapped with plastic from said plastic rolls. For the sake of clarity, the mounting is not shown in detail in the drawings. The mounting is so implemented that the plastic roll 17 can be turned either into a vertical position or a horizontal position or even into a position between these two positions. The turning movement is performed using e.g. a hydraulic cylinder. Plastic film is delivered from the plastic rolls 17, which, because of their function, are also called plastic tensioners, and wound about the bale as the plastic rolls are moving along the guide ring while the bale is either stationary, rotating about its horizontal axis and/or turning about its vertical axis.

The lower end of the frame part 1 of the apparatus is additionally provided with a mounting for a supporting arm 21 supporting a table-like support plate 20 and extending away from the frame part toward the midpart of the apparatus. The supporting arm of the support plate has a telescoping structure such that it allows the position of the support plate at the outer end of the supporting arm to be adjusted substantially horizontally toward the frame part and away from it. In this way, bales of the different widths can be positioned according to their width at exactly the right position relative to the press plates 12. The support plate 20 may also be provided with wheels to permit towing of the apparatus.

In addition, the apparatus comprises a holder for holding the free end of the plastic film and a locking device and a plastic cutter. After a bale has been wrapped, the free end of the plastic film on each plastic roll remains fast in the holder, ready for the next bale to be wrapped. However, for the sake of clarity, these elements are not shown in the drawings.

In the procedure of the invention, the bale is treated as follows. Before the actual wrapping operation, the bales are preferably transported on a trailer or equivalent to a bale storage area. In this situation, the advantages of the apparatus of the invention are brought to focus as the apparatus can also be used to pile up the wrapped bales in multi-tier stacks on the storage site.

To start the working cycle, the wrapping apparatus is brought to a position close to the bale so that the bale can be lifted from the ground by pressing the bale by its ends between the press plates 12. The leg 11 in the lower part of the upright arm of the apparatus has previously been adjusted considering the size of the bale so that, when the leg 11 is supported on the ground, the position of the bale in the vertical direction is such that the plastic film on the upright plastic roll is placed symmetrically about the middle of the elevation of the bale.

Similarly, to center the bale horizontally as accurately as possible between the press plates, the support plate 20 is used, which is brought by means of its supporting arms 21 to a suitable horizontal position relative to the width of the bale. Now, by advancing the apparatus toward the bale at a low height above the ground surface, the apparatus is pushed horizontally close to the bale until the front edge of the support plate lies as close to the bale as possible. The press plates are now in a centric position relative to the bale width and the apparatus can be lowered to the ground to let it stand on its legs 11. Another alternative is to use supporting wheels.

After this, the press plates 12, which have been held at a horizontal distance between them exceeding the length of the bale while approaching the bale, are activated. The bale is thus pressed in a centric position between the press plates so that, as seen from the end of the bale, the gripping point on the bale is substantially aligned with the longitudinal center axis of the bale. The bale is lifted up by the press plates 12 while supporting frame 5 is sliding upward, driven by the hydraulic cylinder 4. After the bale has been lifted high enough, the support plate, which has been initially adjusted to the right height relative to the bale height, is advanced under the bale and the bale is lowered onto the support plate. In this situation, the position of the bale in the vertical direction is such that the plastic film on the upright plastic roll is placed symmetrically about the middle of the elevation of the bale. In other words, the bale is in a centric position at the correct height relative to the plastic film. The press plates 12 are moved further apart from the ends of the bale and the first step of the wrapping operation is started by revolving the upright plastic rolls about the bale, which remains stationary relative to the wrapping apparatus. Both plastic films are now in a substantially upright position. First, the ends and the vertical envelope surfaces, i.e. side surfaces of the bale are wrapped with plastic. To produce an overlapping and to cover the corners of the bale with plastic, the bale is moved vertically or slanted back and forth and the plastic rolls 17 are driven in an upright position, tightening the plastic film over the corners of the bale with two revolutions so that plastic is uniformly applied even on the upper and lower surfaces of the bale, thus covering the bale envelope surface almost completely. Only areas about the size of the support plate 20 on the upper and lower surfaces remain without plastic. Fig. 4 illustrates the situation after the first step.

After the envelope surface, ends and corners of the bale have thus been wrapped, step two is started. The rotation axes of the plastic rolls 17 are turned to a horizontal position and the bale is gripped by means of the press plates 12 by the ends of the bale, by points located substantially on the longitudinal axis of rotation of the bale. The support plate 20 is pulled out of the way by retracting the telescoping supporting arms 21. Next, the rotation function of the press plates is activated and the bale is rotated about its longitudinal axis by means of the rotating mechanism 14 and the press plates 12. The bale is now wrapped by rotating it about its longitudinal axis and driving the plastic rolls along the guide ring 15 through a required distance until the whole bale has been wrapped so that part of the plastic film extends over the corners of the bale, partially covering its ends as well.

Fig. 4 - 6 visualize two different wrapping alternatives. Step one, which is illustrated in Fig. 4, is the same in both alternatives. It shows part of step one, with three overlapping lap turns of plastic film wound about the bale. At this point, the plastic films have not yet been severed, but the wrapping operation is continued with plastic films delivered from the plastic rolls 17, although these film portions and plastic rolls have been omitted from the figure to simplify it.

Fig. 5 shows a bale with a finished wrapping, in which the second step of the wrapping operation has been carried out by interleaving the plastic films in a crosswise manner. The area defined by points A - D on the end surface of the bale was already covered with plastic during the previous step, so it is not wrapped again during this step and therefore the press plates 12 can now be used.

Correspondingly, Fig. 6 presents a bale with a nearly finished wrapping, in which the second wrapping step has been performed by interleaving the plastic films in a parallel fashion. Fig. 6 also shows a step wherein a plastic film is wound over the corners of the bale. Here, the wrapping film 26 is stretched tight over the bale corner by rotating the bale about its longitudinal horizontal axis in the manner indicated by arrow 28 and moving the plastic roll 17 past the bale corner and back along the guide ring substantially in the direction of the longitudinal horizontal axis of the bale as indicated by arrow 27. Due to the form of the guide ring 15, the path of the plastic rolls is curved in the region of the corners of the bale. The direction and speed of movement of the plastic rolls is synchronized with the speed of rotation of the bale so that the corners and ends of the bale can be covered in the desired manner as effectively as possible so as to produce a good final result. If necessary, the back-and-forth movement represented by arrow 27 is repeated until the desired final result has been reached.

A bale thus wrapped has a plastic wrapping as tight and good as possible, yet allowing a maximum saving in the amount of expensive plastic consumed, because no extra overlaid layers are needed.

After the wrapping operation, the bale is lifted directly by means of the wrapping apparatus to a place of storage, either onto the field or onto a stack. The stacks may be piled in as many as three tiers. The lifting is performed by utilizing the hydraulic cylinder 4 of the apparatus.

It is obvious to the person skilled in the art that the invention is not limited to the example described above but that it may be varied within the scope of the claims presented below. Thus, in the first step, it is also possible to use an inclinable support plate to allow a plastic film to be wound over the corners of the bale. In this case, by inclining the support plate 20 (the tilting mechanism is not shown in the drawings), the bale can be tilted so that the plastic film being wound about the bale will cross over the corners of the bale in a desired manner. In this case, with the bale tilted in one direction, the plastic film crosses the upper corners of the bale at its one end and similarly the lower corners at the other end. By then tilting the bale in the other direction, the other corners can be covered with plastic in a corresponding manner. Likewise, in the first step it is also possible to rotate the bale about its vertical center axis, in which case the plastic rolls on the guide ring are not revolved around the bale. In addition, the support plate 20 may be provided with suitable elements, such as rollers or wheels, to allow the bale to be rotated about its longitudinal axis. In this case, for instance, the bale need not necessarily be supported by its ends while the bale is being rotated. Yet another viable alternative is to move the plastic rolls 17 vertically so that the bale need not necessarily be moved in the vertical direction. In this case, during the first step of the wrapping operation, the plastic rolls 17 are moved e.g. in an upright position vertically relative to the bale while the bale is stationary or also moving relative to the plastic rolls. The vertical movement of the bale can also be implemented in a different way than by moving the press plates 12 vertically by means of the supporting frame 5 in the frame part. For instance, the upright arms 8 can be so constructed that they only move in a vertical direction or that they move the press plates 12 vertically as well.

## Claims

1. Method for wrapping an object, such as a straw fodder bale, with plastic, in which method a wrapping apparatus is hitched to a tractor or equivalent, the wrapping operation being started by taking the bale by means of a lifting device comprised in the apparatus from its support, e.g. from a field, into a wrapping apparatus provided with at least one plastic roll (17) dispensing plastic film, **characterized in that** the operation of wrapping the bale with plastic comprises at least the following steps:
a first step, wherein
- the bale is brought to a desired height position in the vertical direction relative to the plastic film on the plastic roll (17),
- the plastic roll (17), with its axis of rotation in a substantially upright position, is revolved about the bale so that at least the ends and two of the long sides of the bale are wrapped with plastic,
- while the plastic film is being revolved, the relative positions of the bale and the plastic roll with respect to each other are changed so that the plastic film is also wound over the corners of the bale and at least partially over the other two long sides of the bale,
and a second step, wherein
- the plastic roll (17) is turned into a substantial horizontal position,
- the bale is rotated about its longitudinal axis while the position of the plastic roll (17) relative to the bale is changed and plastic film is delivered from the plastic roll at least onto the longitudinal envelope surface of the bale until the bale has been wrapped.

2. Method as defined in claim 1 for wrapping an object, such as a straw fodder bale, with plastic, **characterized in that**, in the first step of the wrapping operation, the bale is lifted to a height above a support plate (20) comprised in the apparatus and previously adjusted to an appropriate height, whereupon the support plate (20) is driven under the bale and the bale is lowered onto the support plate, the bale thus remaining at an appropriate height position relative to the plastic film so that, at the initial stage of the wrapping operation, the plastic film extending in a substantially vertical plane is placed symmetrically at the middle of the bale in the vertical direction of the bale, and that plastic film is delivered from the plastic roll (17) and wound about the bale by revolving the plastic roll around the bale in a substantially horizontal plane, and that, to achieve a better coverage, the bale is inclined in the direction of its longitudinal axis while at the same time winding plastic film about the bale so that the corners of the bale and the long sides of the envelope surface not yet covered are at least partially wrapped with plastic.

3. Method as defined in claim 1 for wrapping an object, such as a straw fodder bale, with plastic, **characterized in that**, in the first step of the wrapping operation, the bale is lifted to a height above a support plate (20) comprised in the apparatus and previously adjusted to an appropriate height, whereupon the support plate (20) is driven under the bale and the bale is lowered onto the support plate, the bale thus remaining at an appropriate height position relative to the plastic film so that, at the initial stage of the wrapping operation, the plastic film extending in a substantially vertical plane is placed symmetrically at the middle of the bale in the vertical direction of the bale, and that plastic film is delivered from the plastic roll (17) and wound about the bale by revolving the plastic roll around the bale in a substantially horizontal plane, and that, to achieve a better coverage, the height position of the bale is changed while at the same time winding plastic film about the bale so that the corners of the bale and the long sides of the envelope surface not yet covered are at least partially wrapped with plastic.

4. Method as defined in claim 1, 2 or 3 for wrapping an object, such as a straw fodder bale, with plastic, **characterized in that**, in the second step of the wrapping operation, the bale is gripped by supporting the bale by its ends and the bale is released from the support applied to its envelope surface, and the bale is rotated about its longitudinal axis while at the same time moving the position of the plastic roll (17) relative to the bale and delivering plastic film from the plastic roll at least onto the longitudinal envelope surface of the bale until the bale has been wrapped.

5. Apparatus for wrapping an object, such as a straw fodder bale, with plastic, said apparatus comprising a wrapping apparatus hitched to a tractor or equivalent farm machine, said apparatus comprising a frame part (1) and at least two upright arms (8) provided with press plates (12) able to hold and to turn the bale, **characterized in that** the apparatus comprises a guide ring (15) disposed in a substantially horizontal plane and at least one plastic roll (17) fitted to move along said guide ring and to turn between a horizontal and an upright position, and that the apparatus is provided with at least one actuator arranged to change the vertical distance between the plastic roll (17) and the bale.

6. Apparatus as defined in claim 5, **characterized in that** the frame part is provided with a lifting device serving as an actuator arranged to change the vertical distance between the plastic roll (17) and the bale and comprising at least an supporting frame (5) a power means (4) fitted to move the supporting frame in a substantially vertical direction and a top support bracket (6) connected to the supporting frame, with a substantially horizontal guide ring (15) attached to said top support bracket, and that the apparatus comprises a support plate (20) placed below the guide ring to support the bale while it is being wrapped with plastic.

7. Apparatus as defined in claim 6, **characterized in that** the support plate (20) has been arranged to be driven both horizontally under the bale and from under the bale and vertically to change the height position of the bale.

8. Apparatus as defined in claim 6 or 7, **characterized in that** the support plate (20) has been arranged to be inclined.

9. Apparatus as defined in claim 6, 7 or 8, **characterized in that** the support plate (20) is provided with rollers or equivalent rotating elements to allow the bale to be rotated about its longitudinal axis.

10. Apparatus as defined in any one of claims 5 - 9, **characterized in that** the lower end of at least one of the upright arms (8) is provided with a press plate (12) for pressing and turning the bale, and that the lower end of the other upright arm is correspondingly provided with a freely rotatable press plate (12) pressing the bale.

11. Apparatus as defined in any one of claims 6 - 10, **characterized in that** it comprises a frame box (16) pivotally and centrically mounted on the top beam (7) supported by the top support bracket (6), said frame box being rotatable in a substantially horizontal plane and provided with horizontal arms (22) slidably fitted inside it, with a roller guide (23) fitted at the end of each horizontal arm projecting from the frame box, said roller guide (23) being guided by the guide ring (15) and carrying a plastic roll (17).

12. Apparatus as defined in claim 11, **characterized in that** the horizontal arms have been fitted to slide into and out of the frame box (16) so that the combination consisting of the frame box and the horizontal arms can be repeatedly turned in either direction of rotation about a vertical hinge (19) centrically mounted in the frame box.

## Patentansprüche

1. Verfahren zum Einwickeln eines Objektes, wie beispielsweise einen Strohfutter-Ballen, mit Kunststoff, in welchem Verfahren eine Einwickelvorrichtung an einem Traktor oder Ähnlichem befestigt wird, wobei das Einwickelverfahren begonnen wird, indem der Ballen mittels einer Hebevorrichtung von seiner Auflage, beispielsweise von einem Feld, mittels einer in der Vorrichtung umfassten Hebevorrichrung in eine Einwickelvorrichtung genommen wird, die mit mindestens einer einen Kunststofffilm freigebenden Kunststoffrolle (17) versehen ist,
**dadurch gekennzeichnet, dass** das Einwickelverfahren des Ballens mit Kunststoff mindestens die folgenden Schritte umfasst:
ein erster Schritt, wobei
- der Ballen in eine gewünschte Höhenposition in der Vertikalrichtung relativ zu dem Kunststofffilm auf der Kunststoffrolle (17) gebracht wird,
- die Kunststoffrolle (17) mit ihrer Rotationsachse in einer im Wesentlichen aufrechten Position um den Ballen abgewickelt wird, so dass zumindest die Enden und zwei der langen Seiten des Ballens mit Kunststoff eingewickelt werden,
- die relativen Positionen des Ballens und der Kunststoffrolle in gegenseitigem Bezug während dem Abwickeln des Kunststofffilms verändert werden, so dass der Kunststofffilm auch über die Ecken des Ballens und zumindest teilweise über die anderen zwei langen Seiten des Ballens gewickelt wird,
und ein zweiter Schritt, wobei
- die Kunststoffrolle (17) in eine im Wesentlichen horizontale Position gedreht wird,
- der Ballen um seine Längsachse gedreht wird, während die Position der Kunststoffrolle (17) relativ zu dem Ballen verändert wird, und ein Kunststofffilm von der Kunststoffrolle zumindest auf die längsseitige einhüllende Oberfläche des Ballens gebracht wird, bis der Ballen eingewickelt ist.

2. Verfahren nach Anspruch 1 zum Einwickeln eines Objekts, wie beispielsweise eines Strohfutter-Ballens, mit Kunststoff,
**dadurch gekennzeichnet, dass** der Ballen im ersten Schritt des Einwickel-Verfahrens auf eine Höhe oberhalb einer Stützplatte (20) gehoben wird, die von der Vorrichtung umfasst ist und zuvor auf eine geeignete Höhe justiert wurde, woraufhin die Stützplatte (20) unter den Ballen gebracht wird und der Ballen auf die Stützplatte abgesenkt wird, womit der Ballen relativ zu dem Kunststofffilm auf einer geeigneten Höhen-Position verbleibt, so dass in der Anfangsphase des Einwickelvorgangs der sich im Wesentlichen in einer Vertikalebene erstreckende Kunststofffilm symmetrisch zur Mitte des Ballens in der Vertikalrichtung des Ballens angeordnet wird, und dass ein Kunststofffilm von der Kunststoffrolle (17) abgegeben und um den Ballen durch Abdrehen der Kunststoffrolle um den Ballen in einer im Wesentlichen horizontalen Ebene gewickelt wird, und dass der Ballen in der Richtung seiner Längsachse zum Erhalten einer besseren Abdeckung geneigt wird, während gleichzeitig ein Kunststofffilm um den Ballen gewickelt wird, so dass die Ecken des Ballens und die Langseiten der noch nicht abgedeckten einhüllenden Oberfläche zumindest teilweise mit Kunststoff eingewickelt werden.

3. Verfahren nach Anspruch 1 zum Einwickeln eines Objekts, wie beispielsweise eines Strohfutter-Ballens, mit Kunststoff,
**dadurch gekennzeichnet, dass** im ersten Schritt des Einwickelverfahrens der Ballen auf eine Höhe oberhalb einer Stützplatte (20) gehoben wird, die von der Vorrichtung umfasst ist und zuvor auf eine geeignete Höhe einjustiert wurde, woraufhin die Stützplatte (20) unter den Ballen gebracht wird und der Ballen auf die Stützplatte abgesenkt wird, womit der Ballen auf einer geeigneten Höhenposition relativ zu dem Kunststofffilm verbleibt, so dass bei der anfänglichen Phase des Einwickelvorgangs der sich im Wesentlichen in einer vertikalen Ebene erstreckende Kunststofffilm symmetrisch zur Mitte des Ballens in der Vertikalrichtung des Ballens angeordnet wird, und dass der Kunststofffilm von der Kunststoffrolle (17) abgegeben und um den Ballen gewickelt wird, indem die Kunststoffrolle um den Ballen in einer im Wesentlichen horizontalen Ebene gedreht wird, und dass die Höhenposition des Ballens zum Erreichen einer besseren Abdeckung verändert wird, während gleichzeitig ein Kunststofffilm um den Ballen gewickelt wird, so dass die Ecken des Ballens und die Langseiten der noch nicht abgedeckten einhüllenden Oberfläche zumindest teilweise mit Kunststoff eingewickelt sind.

4. Verfahren nach Anspruch 1, 2 oder 3 zum Einwickeln eines Objekts, wie beispielsweise eines Strohfutter-Ballens, mit Kunststoff,
**dadurch gekennzeichnet, dass** im zweiten Schritt des Einwickelverfahrens der Ballen durch Unterstützen des Ballens an seinen Enden gegriffen wird, und der Ballen von dem auf seine einhüllende Oberfläche bezogene Unterstützung freigegeben wird, und der Ballen um seine Längsachse rotiert wird, während gleichzeitig die Position der Kunststoffrolle (17) relativ zu dem Ballen verändert wird und ein Kunststofffilm von der Kunststoffrolle zumindest auf die längsseitige einhüllende Oberfläche des Ballens gebracht wird, bis der Ballen eingewickelt ist.

5. Vorrichtung zum Einwickeln eines Objekts, wie beispielsweise eines Strohfutter-Ballens, mit Kunststoff, welche Vorrichtung eine an einem Traktor oder einer ähnlichen Landwirtschaftsmaschine befestigte Wickelapparatur aufweist, wobei die Vorrichtung ein Rahmenteil (1) und mindestens zwei aufrechte Arme (8) umfasst, die mit Andruckplatten (12) versehen sind, die den Ballen halten und drehen können,
**dadurch gekennzeichnet, dass** die Vorrichtung einen Führungsring (15) aufweist, der in einer im Wesentlichen horizontalen Ebene angeordnet ist, sowie mindestens eine Kunststoffrolle (17), die zum Bewegen entlang des Führungsrings und zum Drehen zwischen einer horizontalen und einer aufrechten Position bestimmt ist, wobei die Vorrichtung mit mindestens einem Betätigungselement versehen ist, das dazu bestimmt ist, den vertikalen Abstand zwischen der Kunststoffrolle (17) und dem Ballen zu verändern.

6. Vorrichtung nach Anspruch 5,
**dadurch gekennzeichnet, dass** das Rahmenteil mit einer Hebevorrichtung versehen ist, die als Betätigungselement dient und dazu bestimmt ist, den Vertikalabstand zwischen der Kunsutoffrolle (17) und dem Ballen zu verändern, und die mindestens einen Stützrahmen (5), eine zum Bewegen des Stützrahmens in einer im Wesentlichen vertikalen Richtung bestimmte Antriebseinheit (4) und eine obere Rahmenhaltemng (6) aufweist, die mit dem Stützrahmen verbunden ist, mit einem im Wesentlichen horizontalen Führungsring (15), der an der oberen Rahmenhalterung befestigt ist, und dass die Vorrichtung eine Stützplatte (20) aufweist, die unterhalb des Führungsrings angeordnet ist, um den Ballen zu unterstützen, während er mit Kunststoff eingewickelt wird.

7. Vorrichtung nach Anspruch 6,
**dadurch gekennzeichnet, dass** die Stützplatte (20) dazu bestimmt ist, sowohl horizontal unter den Ballen bewegt zu werden, sowie von der Unterseite des Ballens und vertikal, um die Höhenposition des Ballens zu verändern.

8. Vorrichtung nach Anspruch 6 oder 7,
**dadurch gekennzeichnet, dass** die Stützplatte (20) in geneigter Weise angeordnet ist.

9. Vorrichtung nach Anspruch 6, 7 oder 8,
**dadurch gekennzeichnet, dass** die Stützplatte (20) mit Rollen oder äquivalenten Rotations-Elementen versehen ist, um den Ballen um seine Längsachse rotieren zu können.

10. Vorrichtung nach einem der Ansprüche 5 - 9,
**dadurch gekennzeichnet, dass** das untere Ende von mindestens einem der aufrechten Arme (8) mit einer Andruckplatte (12) zum Andrücken und Drehen des Ballens versehen ist, und dass das untere Ende des anderen aufrechten Arms in entsprechender Weise mit einer frei rotierbaren Andruckplatte (12) versehen ist, die auf den Ballen drückt.

11. Vorrichtung nach einem der Ansprüche 6-10,
**dadurch gekennzeichnet, dass** sie einen Rahmenkasten (16) aufweist, der drehbar und zentrisch auf dem oberen Träger (7) montiert ist, welcher durch die obere Rahmenhalterung (6) getragen ist, wobei der Rahmenkasten in einer im Wesentlichen horizontalen Ebene rotierbar und mit horizontalen Armen (22) versehen ist, die gleitend innerhalb desselben eingepasst sind, mit einer Rollenführung (23), die an dem Ende eines jeden von dem Rahmenkasten abragenden horizontalen Arm vorgesehen ist, wobei die Rollenführung (23) durch den Führungsring (15) geführt ist und diese eine Kunststoffrolle (17) trägt.

12. Vorrichtung nach Anspruch 11,
**dadurch gekennzeichnet, dass** die horizontalen Arme dazu bestimmt sind, in die Rahmenbox hinein und aus der Rahmenbox (16) herauszugleiten, so dass die Kombination aus der Rahmenbox und den horizontalen Armen wiederholt in beide Rotationsrichtungen um eine vertikale Aufhängung (19) gedreht werden kann, die zentrisch in der Rahmenbox montiert ist.

## Revendications

1. Procédé d'emballage d'article, tel qu'une balle de fourrage de paille, avec une matière plastique, procédé dans lequel un appareil d'emballage est attelé à un tracteur ou équivalent, l'opération d'emballage étant démarrée en prenant la balle au moyen d'un dispositif de levage appartenant à l'appareil depuis son support, par exemple depuis la surface d'un champ, pour la mettre dans un appareil d'emballage doté d'au moins un rouleau de matière plastique (17) distribuant du film plastique, **caractérisé en ce que** l'opération d'emballage de la balle avec la matière plastique comprend au moins les étapes suivantes ;
une première étape, dans laquelle :
- la balle est amenée à une position désirée en hauteur dans la direction verticale par rapport au film plastique sur le rouleau de matière plastique (17),
- le rouleau de matière plastique (17), son axe de rotation étant dans une position sensiblement verticale, est mis en rotation autour de la balle de sorte qu'au moins les extrémités et deux des longs côtés de la balle soient emballés avec la matière plastique,
- pendant que le film plastique est mis en rotation, les positions relatives de la balle et du rouleau de matière plastique l'une par rapport à l'autre sont modifiées de sorte que le film plastique soit également enroulé autour des coins de la balle et au moins partiellement sur les autres deux côtés longs de la balle,
et une seconde étape, dans laquelle ;
- le rouleau de matière plastique (17) est tourné dans une position sensiblement horizontale,
- la balle est mise en rotation sur son axe longitudinal pendant que la position du rouleau de matière plastique (17) par rapport à la balle est modifiée et que le film plastique est déroulé depuis le rouleau de matière plastique au moins sur la surface de l'enveloppe longitudinale de la balle jusqu'à ce que la balle ait été emballée.

2. Procédé tel qu'il est défini dans la revendication 1 pour emballer un article, tel qu'une balle de fourrage de paille, avec une matière plastique, **caractérisé en ce que**, lors de la première étape de l'opération d'emballage, la balle est soulevée à une certaine hauteur au-dessus d'une plaque de support (20) appartenant à l'appareil et auparavant ajustée à une hauteur appropriée, après quoi la plaque de support (20) est amenée sous la balle et la balle est abaissée sur la plaque de support, la balle restant ainsi à une position en hauteur appropriée par rapport au film plastique de sorte que, à l'étape initiale de l'opération d'emballage, le film plastique s'étendant dans un plan sensiblement vertical soit placé de façon symétrique au milieu de la balle dans le sens vertical de la balle, et que le film plastique soit déroulé du rouleau de matière plastique (17) et enroulé autour de la balle en faisant tourner le rouleau de matière plastique autour de la balle dans un plan sensiblement horizontal, et que, pour obtenir un meilleur recouvrement, la balle soit inclinée dans la direction de son axe longitudinal tout en enroulant en même temps le film plastique autour de la balle de sorte que les coins de la balle et les côtés longs de la surface d'enveloppe non encore couverts soient au moins partiellement emballés avec du plastique.

3. Procédé tel qu'il est défini dans la revendication 1 pour emballer un article, tel qu'une balle de fourrage de paille, avec une matière plastique, **caractérisé en ce que**, dans une première étape de l'opération d'emballage, la balle est soulevée à une certaine hauteur au-dessus d'une plaque de support (20) appartenant à l'appareil et auparavant ajustée à une hauteur appropriée, après quoi la plaque de support (20) est amenée sous la balle et la balle est abaissée sur la plaque de support, la balle restant ainsi à une position en hauteur appropriée par rapport au film plastique de sorte que, à l'étape initiale de l'opération d'emballage, le film plastique s'étendant dans un plan sensiblement vertical soit placé de façon symétrique au milieu de la balle dans le sens vertical de la balle et que le film plastique soit déroulé du rouleau de matière plastique (17) et enroulé autour de la balle en faisant tourner le rouleau de matière plastique autour de la balle dans un plan sensiblement horizontal, et que, pour obtenir un meilleur recouvrement, la position en hauteur de la balle soit modifiée tout en enroulant en même temps le film plastique autour de la balle de sorte que les coins de la balle et les côtés longs de la surface de l'enveloppe non encore couverts soient au moins partiellement enveloppés par de la matière plastique.

4. Procédé tel qu'il est défini dans les revendications 1, 2 ou 3 pour emballer un article, tel qu'une balle de fourrage de paille, avec une matière plastique, **caractérisé en ce que**, dans la seconde étape de l'opération d'emballage, la balle est prise en soutenant la balle par ses extrémités et la balle est libérée du support appliqué à la surface de son enveloppe, et la balle est mise en rotation autour de son axe longitudinal tout en déplaçant en même temps la position du rouleau de plastique (17) par rapport à la balle et en déroulant du film plastique depuis le rouleau de plastique au moins sur la surface longitudinale de l'enveloppe de la balle jusqu'à ce que la balle ait été emballée.

5. Appareil pour emballer un objet tel qu'une balle de fourrage de paille, avec du plastique, ledit appareil comprenant un appareillage de levage attelé à un tracteur ou machine agricole équivalente, ledit appareil comprenant une partie de châssis (1) et au moins deux bras verticaux (8) dotés de plaques de pression (12) capable de maintenir et de faire tourner la balle, **caractérisé en ce que** l'appareil comprend un anneau de guidage (15) disposé dans un plan sensiblement horizontal et au moins un rouleau de plastique (17) monté pour se déplacer le long de l'anneau de guidage et pour tourner entre une position horizontale et une position verticale, et **en ce que** l'appareil est doté d'au moins un actionneur disposé pour modifier la distance verticale entre le rouleau de matière plastique (17) et la balle.

6. Appareil selon la revendication 5, **caractérisé en ce que** la partie châssis est dotée d'un dispositif de levage servant d'actionneur disposé pour modifier la distance verticale entre le rouleau de matière plastique (17) et la balle et comprenant au moins un châssis de support (5), un moyen d'entraînement (4) monté de façon à déplacer le châssis de support dans une direction sensiblement verticale et une bride de support supérieure (6) connectée au châssis de support, un anneau de guidage pour l'essentiel horizontal (15) fixé à ladite bride de support supérieure, et **en ce que** l'appareil comprend une plaque de support (20) placée au-dessous de l'anneau de guidage pour supporter la balle pendant qu'elle est emballée avec le plastique.

7. Appareil selon la revendication 6, **caractérisé en ce que** la plaque de support (20) est disposée pour être entraînée à la fois horizontalement sous la balle et depuis le dessous de la balle et verticalement pour modifier la position en hauteur de la balle.

8. Appareil selon les revendications 6 ou 7, **caractérisé en ce que** la plaque de support (20) est disposée de manière inclinée.

9. Appareil selon les revendications 6, 7 ou 8, **caractérisé en ce que** la plaque de support (20) est dotée de galets ou d'éléments rotatifs équivalents pour permettre à la balle d'être mise en rotation par rapport à son axe longitudinal.

10. Appareil selon l'une des revendications 5 à 9, **caractérisé en ce que** l'extrémité inférieure d'au moins un des bras verticaux (8) est dotée d'une plaque de pression (12) pour presser et faire tourner la balle, et **en ce que** l'extrémité inférieure de l'autre bras vertical est de façon correspondante dotée d'une plaque de pression libre en rotation (12) faisant pression sur la balle.

11. Appareil selon l'une des revendications 6 à 10, **caractérisé en ce qu'**il comprend un châssis cadre (16) monté de façon centrée et pivotante sur la poutre supérieure (7) supportée par la bride de support supérieure (6), ledit châssis cadre pouvant être mis en rotation dans un plan sensiblement horizontal et doté de bras horizontaux (22) montés de façon coulissante à l'intérieur, un guide à rouleau (23) étant monté à l'extrémité de chaque bras horizontal se projetant depuis le châssis cadre, ledit guide de rouleau (23) étant guidé par l'anneau de guidage (15) et portant un rouleau de plastique (17).

12. Appareil selon la revendication 11, **caractérisé en ce que** les bras horizontaux sont montés pour coulisser dans et hors du châssis cadre (16) de sorte que la combinaison composée du châssis cadre et des bras horizontaux puisse être tournée de façon répétée dans toutes les directions de rotation autour d'une charnière verticale (19) montée de façon centrée dans le châssis cadre.
